# EUROPÄISCHE PATENTSCHRIFT

(11) **EP 1 156 305 B1**
(45) Veröffentlichungstag und Bekanntmachung des Hinweises auf die Patenterteilung: **22.07.2009**
(21) Anmeldenummer: 01103931.0
(22) Anmeldetag: 19.02.2001
(51) Int. Cl.: G01F 23/296

(54) **Verfahren zur Ansteuerung einer Wandlereinrichtung in Füllstandsmessgeräten und Vorrichtung zur Durchführung eines solchen Verfahrens**
Method for controlling a transducer arrangement in liquid level measurement apparatuses and device for curying out of the method
Procédé d' actionnement d' un ensemble transducteur dans des appareils de mesure du niveau d' un fluide et dispositif pour la mise en oeuvre du procédé

(30) Priorität: 15.05.2000 DE 10023305
(43) Veröffentlichungstag der Anmeldung: 21.11.2001
(73) Patentinhaber: VEGA Grieshaber KG, 77709 Wolfach (DE)
(72) Erfinder: Raffalt, Felix, Dipl.-Ing., 77756 Hausach (DE); Frick, Adrian, Dipl.-Ing., 77709 Wolfach (DE)
(74) Vertreter: Patentanwälte Westphal, Mussgnug & Partner

(56) Entgegenhaltungen:
- EP-A- 0 494 398
- DE-A- 19 835 370

## Beschreibung

Verfahren zur Ansteuerung einer Wandlereinrichtung in Füllstandmessgeräten und Vorrichtung zur Durchführung eines solchen Verfahrens.

Die Erfindung betrifft ein Verfahren zur Ansteuerung einer Wandlereinrichtung in Füllstandmessgeräten gemäß den Merkmalen des Oberbegriffs des Anspruch 1 sowie eine Vorrichtung zum Durchführen dieses Verfahrens.

Ein solches Verfahren ist beispielsweise aus der deutschen Patentanmeldung DE 19 621 449 A1 der Anmelderin bekannt. Dort ist auch der prinzipielle Aufbau eines Gabelresonators beschrieben, worauf ausdrücklich und vollinhaltlich zum Zwecke der Offenbarung Bezug genommen wird.

Eine allgemein bei Vibrationsresonatoren und Schwinggabelsystemen gestellte Anforderung ist die Überwachung der Verbindungsstecker und Leitungen zwischen Wandlereinrichtung, der im Allgemeinen als Piezoantrieb ausgebildet ist, und Auswerteelektronik auf Unterbrechung.

Gelöst wird diese Aufgabe bisher z. B. durch eine Rückführung des übertragenen Signals auf eine jeweils zweite parallele Leitung. Fehlt das rückgeführte Signal, so liegt ein Defekt in der Verbindung vor, und eine Sensorelektronik gibt eine Störungsmeldung aus. Aufgrund des jedoch verhältnismäßig hohen technischen Aufwands, der z. B. durch die Verdoppelung der Signalleitungen und Steckverbindungspole sowie einer zugehörigen Auswerteschaltung bedingt ist, begnügt man sich in der Praxis mit der Überwachung der Masseleitung, wodurch aber nur grobe Fehler, wie etwa eine nicht gesteckte Steckverbindung oder eine Durchtrennung eines Kabelstranges detektiert werden kann.

Eine andere Lösung des Problems ist in der bereits angesprochenen deutschen Patentanmeldung DE 19 621 449 A1 der Anmelderin beschrieben. Zur Überwachung wird dort dem Piezoelement ein Widerstand parallelgeschaltet. Die auf diese Weise erzeugte Signaländerung wird in der Auswerteelektronik durch einen gleichartigen, gegenphasig gespeisten Widerstand kompensiert. Tritt eine Unterbrechung an beliebiger Stelle des Signalstromkreises auf, so wird das Stromgleichgewicht gestört und die Schwingfrequenz des Gabelresonators verlässt den Nennarbeitsbereich, was die Ausgabe einer Störungsmeldung zur Folge hat.

Problematisch bei dieser letztgenannten Lösung ist, dass bei verkleinerten Schwinggabeln, welche gegenüber Standardschwinggabeln eine dreifache Schwingfrequenz aufweisen, der Parallelwiderstand einen dreimal kleineren Wert aufweisen müsste, um bei den hervorgerufenen verdreifachten Blindströmen eine ausreichende Frequenzverschiebung im Fehlerfall zu bewirken. Das Nutzsignal wird von einem derart verkleinerten Parallelwiderstand jedoch zu stark gedämpft. Weiterhin ist die Anbringung eines Überwachungselementes am Antrieb aufgrund der bei verkleinerten Schwinggabeln äußerst beengten Platzverhältnisse ohnehin nur umständlich möglich. Darüber hinaus muss bei Hochtemperaturbetrieb der Schwinggabeln der Parallelwiderstand und seine Kontaktierung für solch hohe Temperaturen dauerhaft geeignet sein (z. B. 200° C).

Der Erfindung liegt die Aufgabe zugrunde, ein Verfahren und eine Vorrichtung anzugeben, die es gestatten, den gesamten Stromkreis der Wandlereinrichtung auf Unterbrechung hin zu überwachen, ohne dass zusätzliche Leitungen erforderlich sind oder am Antriebselement selbst Bauelemente benötigt werden. Darüber hinaus soll mit dem zu findenden Verfahren bzw. Vorrichtung eine Signaldämpfung vermieden werden und eine Ausfallsicherheit des gesamten Systems gewährleistet sein.

Gelöst wird diese Aufgabe für das Verfahren durch die Merkmale des Anspruchs 1.

Eine Vorrichtung zur Durchführung des Verfahrens ist Gegenstand des Anspruchs 11.

Weiterbildungen der Erfindung sind Gegenstand der Unteransprüche.

Die Erfindung beruht also im Wesentlichen darauf, dass während der Schwingungserregung der zwischen den Zuleitungen der Wandlereinrichtung liegende Kapazitätswert oder eine hierzu proportionale Größe ermittelt und bei Abweichung von einer vorgegebenen Sollgröße um einen vorgebenen Wert ein Störmeldesignal erzeugt wird. Es wird also simultan während des Schwingvorganges die Kapazität der Wandlereinrichtung, z. B. der Piezoelemente einer solchen Wandlereinrichtung einschließlich Kabelzuleitung, bestimmt und beim Unterschreiten eines vorgegebenen Wertes eine Störungsmeldung ausgegeben.

Die Kapazitätmessung erfolgt vorzugsweise durch Auswertung des Stromes bzw. der Strommenge (Ladung), die beim Umladen von Piezoelement und Zuleitung fließt.

Das erfindungsgemäße Verfahren und eine Vorrichtung zur Durchführung des Verfahrens werden anhand eines Ausführungsbeispieles im Zusammenhang mit zwei Figuren erläutert. Es zeigen :
- Fig. 1: ein Blockschaltbild eines erfindungsgemäßen Vibrations-Füllstand-Grenzschalters, und

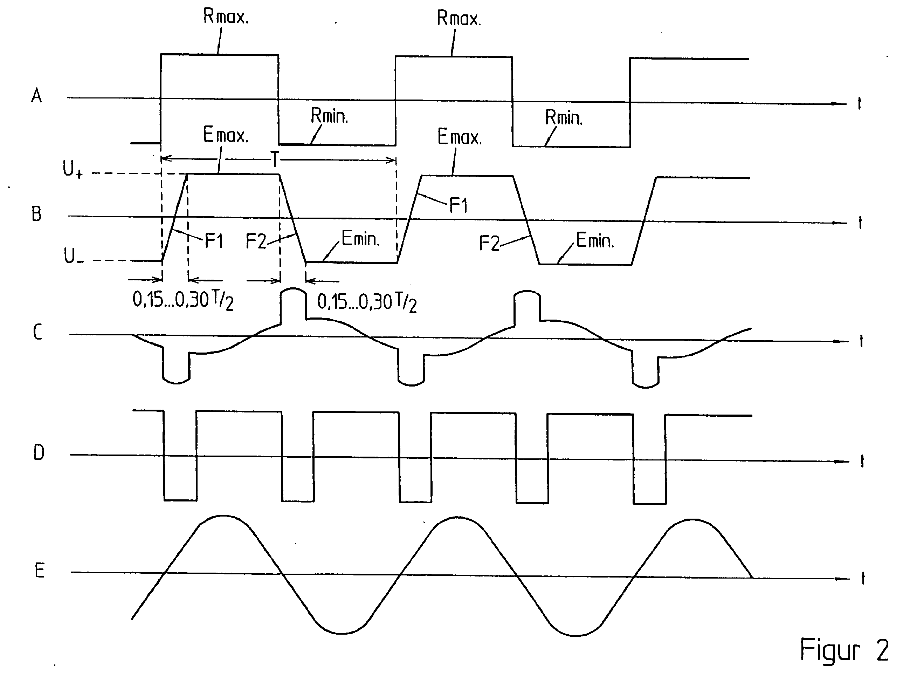

- Fig. 2: den zeitlichen Verlauf mehrerer Signale der in Fig. 1 dargestellten Schaltung.

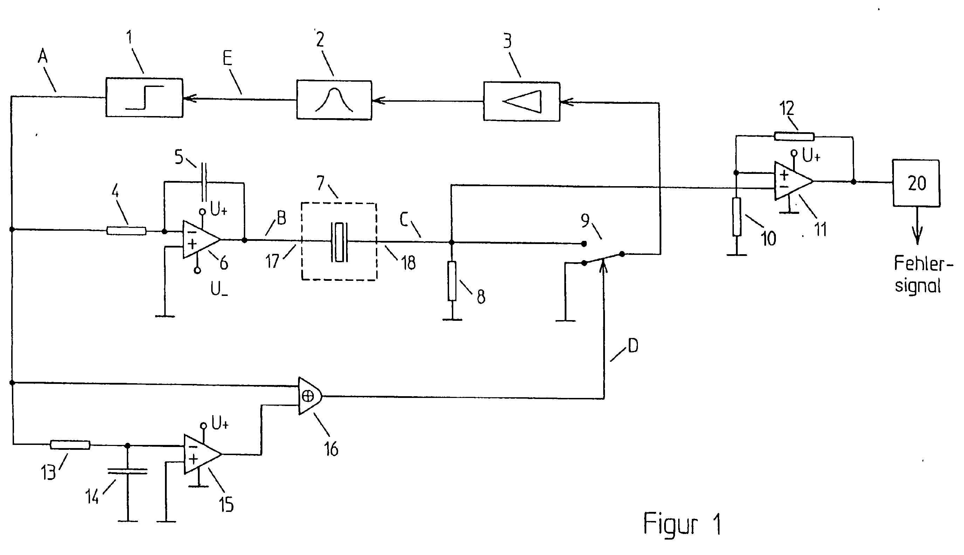

Im nachfolgenden Ausführungsbeispiel von Figur 1 ist als Erreger- und Detektionselement ein einziges Piezoelement gezeigt. Dieses kann jedoch durch einen ähnlich wirkenden Wandler (z.B. mehrere Piezoelemente, induktiver Wandler oder dgl.) ersetzt werden.

Das in Figur 1 beispielhaft dargestellte Blockschaltbild eines Vibrations-Füllstand-Grenzschalters weist eine Verstärkereinrichtung 1, 2, 3 auf, in deren Rückkopplungskreis eine Wandlereinrichtung 7, vorzugsweise eine Piezowandlereinrichtung geschaltet ist. Im Einzelnen besteht die Verstärkereinrichtung aus einem Verstärker 3 mit nachgeschaltetem Grundwellenbandfilter 2 und einem nachgeschalteten Nulldurchgangsdedektor 1 bzw. einer Rechteckformerstufe 1. An den Ausgang des Nulldurchgangsdetektors 1 ist der Eingang eine Integrators geschaltet. Dieser Integrator weist einen Operationsverstärker 6 auf. Der nicht invertierende Eingang dieses Operationsverstärkers 6 ist mit Bezugspotential verbunden. Der invertierende Eingang ist einerseits über einen Kondensator 5 mit dem Ausgang des Operationsverstärkers 6 in Verbindung und andererseits über einen Widerstand 4 an den Ausgang des Nulldurchgangdetektors 1 angeschlossen. Der Ausgang des Operationsverstärkers 6 des Integrators ist über eine Zuleitung 17 an einen Pol der Wandlereinrichtung 7 angeschlossen. Der andere Pol der Wandlereinrichtung 7 ist über eine Zuleitung 18 an eine Klemme eines Widerstandes 8 angeschlossen. Die andere Klemme des Widerstandes 8 liegt auf Bezugspotential. Der Verbindungspunkt zwischen Widerstand 8 und der Zuleitung 18 ist darüber hinaus an eine Eingangsklemme eines Umschalters 9 geschaltet. Eine weitere Eingangsklemme des Umschalters 9 liegt auf Bezugspotential. Die Ausgangsklemme des Umschalters 9 ist mit dem Eingang des Verstärkers 3 in Kontakt. Umgeschaltet wird der Umschalter 9 durch ein Steuersignal D, das am Ausgang eines EXOR-Gatters 16 abgegriffen wird. Ein erster Eingang dieses EXOR-Gatters ist mit dem Ausgang des Nulldurchgangdetektors 1 und zugleich mit der nicht an den Operationsverstärker 6 verbundenen, freien Klemme des Widerstandes 4 in Verbindung. Ein zweiter Eingang des EXOR-Gatters 16 ist an den Ausgang eines Komparators 15 geschaltet, dessen nichtinvertierender Eingang auf Bezugspotential liegt und dessen invertierender Eingang über einen Widerstand 13 ebenfalls mit dem Ausgang des Nulldurchgangsdedektors 1 verbunden ist. Zwischen Bezugspotential und invertierenden Eingang des Operationsverstärkers 15 bzw. Komparators 15 ist ein Kondensator 14 geschaltet.

Zusätzlich ist die Leitung 18 mit einem Hysterese behafteten Komparator 11 in Verbindung, indem die Leitung 18 mit dem invertierenden Eingang des Komparators 11 in Kontakt steht. Der nichtinvertierende Eingang dieses Komparators 11 ist einerseits über einen Widerstand 10 auf Bezugspotential gelegt und andererseits über einen weiteren Widerstand 12 mit dem Ausgang des Komparators 11 in Verbindung. Der Ausgang des Komparators 11 ist an eine Frequenzauswertestufe 20 geschaltet. Die Frequenzauswertestufe 20 erzeugt ein optisches und/oder akustisches Störmeldesignal, wenn in nachfolgender noch zu erläuternder Art und Weise festgestellt wird, dass die Wandlereinrichtung 7 nicht korrekt angeschlossen ist oder ein Leitungsdefekt in der Figur 1 dargestellten Schaltungsanordnung vorliegt.

Es ergibt sich folgender Funktionsablauf für die in Figur 1 gezeigte Schaltung.

Das vom Eingangsverstärker 3 verstärkte Schwingungsdetektionssignal wird dem Grundwellenbandfilter 2 zugeführt, welches das gefilterte und phasenkorrigierte, etwa sinusförmuige Zwischensignal E erzeugt. Dieses wird vom Nulldurchgangsdetektor 1 in ein Rechtecksignal A umgewandelt. Bei bekannten Sensoren würde dieses Signal A als Erregersignal für das Piezoelement 7 verwendet.

Das Signal A wird zur Reduktion seines Oberwellengehaltes einem Integrator 4, 5, 6 zugeführt, welcher das trapezartige Signal B generiert. Die Integrationszeitkonstante ist mittels der Bauteile 4, 5 derart gewählt, dass der Operationsverstärker 6 nach 0,15 bis 0,30 %, vorzugsweise ca. 25 %, der Halbperiodendauer T/2 des Signals A seinen maximalen bzw. minimalen Endwert Emax, Emin erreicht. Da der Operationsverstärker 6 vorzugsweise eine Rail-to-Rail-Ausgangsstufe aufweist, entsprechen diese Werte der positiven bzw. negativen Betriebsspannung U-, U. Das Signal B erreicht somit den vollen Betriebsspannungshub und hat durch den Integrationsvorgang eine mittels Widerstand 4 und Kondensator 5 definierte Flankensteilheit. Gegenüber dem Rechtecksignal A ist das trapezartige Signal B stark oberwellenreduziert, so daß im piezoelektrischen Schwingelement 7 ein nur geringer mechanischer Oberwellenanteil erregt wird.

Die Spannungszeitfläche des Signals B ist zwar gegenüber der des Rechtecksignals A etwas verringert, jedoch deutlich größer als bei einem Sinussignal. Bei gleicher Versorgungsspannung ermöglicht das Signal B im Vergleich zu einem Sinussignal eine vorteilhafterweise größere Erregerleistung.

Der Stromfluss durch das Piezoelement 7 wird am Messwiderstand 8 gemessen. Er setzt sich zusammen aus dem erregersignalbedingten Umladestrom des Piezoelementes 7 und den aufgrund der mechanischen Gabelresonatorschwingung erzeugten piezoelektrischen Ladungsquanten. Das Signal C zeigt die Überlagerung beider Stromkomponenten. Die Trennung von Schwingungsdetektionssignal und Betriebssignal erfolgt mittels Umschalter 9. Er tastet nach Maßgabe eines Steuersignals D die im Detektionssignal unerwünschten Umladeströme aus, indem er während der Zeit der Umladephase den Signaleingang des Eingangsverstärkers 3 auf Massepotential legt. Das hierzu benötigte Steuersignal D wird vom Signal A abgeleitet, indem mittels Widerstand 13, Kondensator 14 und Komparator 15 ein zu A phasenverschobenes, invertiertes Hilfssignal erzeugt wird, welches durch Exlusivveroderung mit dem Signal A am EXOR-Gatter 16 das Signal D ergibt. Die Low-Phase des Steuersignals D definiert die Zeit der Signalaustastung und ist stets etwas länger gewählt als die steigende bzw. fallende Signalphase in Signal B.

Die Signale B und C werden mittels Leitungen 17, 18 zu dem Piezoelement 7 übertragen. Wird eine dieser Leitungen von der Elektronik abgetrennt, bricht die Oszillatorschwingung ab, was von der nachgeschalteten Auswerteelektronik als Fehlerzustand erkannt wird. Erfolgt die Unterbrechung jedoch piezoseitig, so schwingt ab einer gewissen Kabellänge der Leitungen 17, 18 der Oszillator weiter, da er durch die verbleibende Kabelkapazität weiterhin rückgekoppelt wird.

Die Schwingfrequenz ist von der verbleibenden Kabellänge sowie elektromagnetischen Einstreuungen abhängig und kann im Nennarbeitsbereich der Schwinggabel liegen, so dass der Defekt von der nachgeschalteten Frequenzauswerteelektronik gegebenenfalls nicht erkannt werden kann.

Zur Funktionsüberwachung der Piezoelementzuleitungen 171 18 wird die Kapazität zwischen diesen während des Schwingvorganges simultan gemessen.

Die Piezokapazität beträgt typ. etwa 2 nF, die Kabelkapazität typ. max. etwa 0,5 nF. Eine Unterscheidung, ob das Piezoelement angeschlossen ist, ist daher anhand des Kapazitätswertes eindeutig möglich.

Zu diesem Zweck wird das die Piezoumladeströme beinhaltende, am Messwiderstand 8 angegriffene Signal C mittels hysteresebehaftetem Komparator 10, 11, 12 ausgewertet. Die Widerstände 10, 12 verleihen dem Komparator 11 eine symmetrisch zum Massepotential wirkende Schalthysterese. Während der ansteigenden bzw. abfallenden Signalphase von B treten am Messwiderstand 8 Spannungsamplituden auf, die proportional zur Signalanstiegsgeschwindigkeit von Signal B und der Summenkapazität von Piezoelement 7 und Leitung 17, 18 sind. Die Schalthysterese des Komparators 11 ist so groß gewählt, daß die Kapazität der Leitungen 17, 18 kein Umschalten des Komparators 11 bewirken kann, während bei angeschlossener Piezokapazität der Komparator 11 beim Flankenwechsel von Signal B jeweils in die umgekehrte Lage kippt. Es entsteht somit am Ausgang von Komparator 11 ein Signal, welches abgesehen von Laufzeitunterschieden dem Signal A entspricht und einer nicht näher dargestellten Fehlerauswerteeinheit zugeführt wird.

Die Frequenzauswertestufe wird mit ihrem Eingang nun nicht, wie es dem Stand der Technik entspräche, mit dem Signal A verbunden, sondern mit dem Ausgangssignal des Komparators 11. Eine Unterbrechung im Piezostromkreis führt somit dazu, dass in der Frequenzauswertestufe die Schwingungsausfallüberwachung anspricht.

Da die Komparatorschaltung 10, 11, 12 und der Messwiderstand 8 permanent vom normalen Meßsignal durchlaufen werden, ist ein unbemerkter Ausfall dieses Schaltungsteils nicht möglich. Die Eignung nach TÜV-Anforderungsklasse 3 ist somit gegeben.

Während bei Stromkreisüberwachungsverfahren mittels Parallelwiderständen oder rückgeführten Leitungen lediglich eine indirekte Überprüfung der Piezoelementenstromzuführung stattfindet, ermöglicht das beschriebene Verfahren durch Messung der Piezoelementkapazität eine direkte Kontrolle des Piezoelements auf physikalisches Vorhandensein im Stromkreis.

Figur 1 stellt ein praktisches Ausführungsbeispiel einer Anordnung dar, in welcher ein Piezoelement oberwellenarm elektrisch erregt wird, von selbigem Piezoelement anhand der piezoelektrisch erzeugten Ladungsquanten ein Detektionssignal für die mechanische Schwingung abgeleitet wird und von selbigem Piezoelement während des Schwingvorgangs die Eigenkapazität gemessen wird.

. Es können auch mehrere Piezoelemente anstelle eines einzigen Piezoelementes eingesetzt werden. Die oberwellenarme Erregung ist auch dort möglich, wo ein oder mehrere Piezoelemente ausschließlich zur Schwingungserregung eingesetzt werden.

Obwohl im Ausführungsbeispiel als Wandlereinrichtung ein kapazitiver Wandler, nämlich ein Piezoelement, beschrieben wurde, könnte auch ein induktiver Wandler eingesetzt werden. Als zu überwachende Größe könnte dann der zwischen den Leitungen des Wandlers liegende Induktivitätswert oder eine hierzu proportionale Größe erfasst werden.

## Patentansprüche

1. Verfahren zur Ansteuerung einer zwei Zuleitungen (17, 18) aufweisenden Wandlereinrichtung (7) in einem Füllstandmeßgerät, bei welchem die Wandlereinrichtung (7) an einen Gabelresonator mit Gabelzinken gekoppelt ist und sowohl zur Schwingungsanregung als auch zur Schwingungsdetektion dient,
**dadurch gekennzeichnet,**
**daß** während der Schwingungserregung der zwischen den Zuleitungen (17, 18) liegende Kapazitätswert oder Induktivitätswert oder eine hierzu proportionale Größe ermittelt und bei Abweichung von einer vorgegebenen Sollgröße um einen vorgegebenen Wert ein Störmeldesignal erzeugt wird.

2. Verfahren nach Anspruch 1,
**dadurch gekennzeichnet, daß** das Störmeldesignal bei Unterschreiten der vorgegebenen Sollgröße um einen vorgegebenen Wert erzeugt wird.

3. Verfahren nach Anspruch 1 oder 2,
**dadurch gekennzeichnet, daß** die Ermittlung des Kapazitätswertes oder Induktivitätswertes durch Auswertung des Stromes oder der Strommenge und damit der Ladung erfolgt, die in der Wandlereinrichtung (7) und Zuleitungen (17, 18) während Umladevorgängen fließt.

4. Verfahren nach einem der Ansprüche 1 bis 3,
**dadurch gekennzeichnet, daß** der Meßbereich für die Kapazitätsmessung im nF-Bereich liegt.

5. Verfahren nach einem der Ansprüche 1 bis 4,
**dadurch gekennzeichnet, daß** bei einem erfaßten Kapazitätswert von größer etwa 1nF und insbesondere von etwa 2,5nF ein störungsfreier Betrieb signalisiert wird.

6. Verfahren nach einem der Ansprüche 1 bis 5,
**dadurch gekennzeichnet, daß** bei einem erfaßten Kapazitätswert von kleiner 1nF und insbesondere von etwa 0,5nF ein gestörter Betrieb signalisiert wird, indem ein Störmeldesignal ausgegeben wird.

7. Verfahren nach einem der Ansprüche 1 bis 6,
**dadurch gekennzeichnet, daß** zur Bestimmung des Kapazitätswerts die in der Wandlereinrichtung (7) fließenden Umladeströme an einem Messwiderstand (8) abgegriffen und in einem Komparator (11) ausgewertet werden.

8. Verfahren nach Anspruch 7,
**dadurch gekennzeichnet, daß** der Komparator (11) mit einer Schalthysterese beaufschlagt ist.

9. Verfahren nach Anspruch 8,
**dadurch gekennzeichnet, daß** die -Schalthysterese symmetrisch gewählt ist.

10. Verfahren nach einem der Ansprüche 1 bis 9,
**dadurch gekennzeichnet, daß** die Schalthysterese des Komparators (11) so groß gewählt ist, daß eine durch die Leitungen (17, 18) allein vorgegebene Kapazität (7) oder Induktivität nicht zu einem Umschalten des Komparators (11) führt, während bei korrekt an die Leitungen (17, 18) angeschlossener Wandlereinrichtung (7) ein Umschalten des Komparators (11) erfolgt nach Maßgabe von Flankenwechseln eines der Wandlereinrichtung (7) zugeführten Erregersignals (B).

11. Vorrichtung zur Durchführung des Verfahrens nach einem der Ansprüche 1 bis 10 bestehend aus einer Wandlereinrichtung (7), einem Rückkopplungszweig mit einer Verstärkeranordnung (1, 2, 3), einem Umschalter (9) und einer ohmschen Messeinrichtung (8), wobei die Wandlereinrichtung (7) in den Rückkopplungszweig der Verstärkeranordnung (1, 2 ,3) geschaltet ist, wobei an eine mit dem Eingang der Verstärkeranordnung (1, 2 ,3) nach Maßgabe eines Steuersignals (D) mittels des Umschalters (9) ausschaltbare erste Zuleitung (18) der Wandlereinrichtung (7) die ohmsche Messeinrichtung (8) geschaltet ist, an welcher Umladeströme der Wandlereinrichtung in eine Spannung gewandelt werden,
**dadurch gekennzeichnet, dass** die Messeinrichtung (8) mit einem ersten Eingang (-) eines Komparators (11) verbunden ist, dessen zweiter Eingang (+) auf einem vorgegebenen Potential liegt, und dass an den Ausgang des Komparators (11) eine Frequenzauswertestufe (20) angeschlossenen ist, die ein Störmeldesignal generiert, wenn ein am Ausgang des Komparators (11) abgreifbares Signal eine vorgegebene Frequenz unterschreitet.

12. Vorrichtung nach Anspruch 11,
**dadurch gekennzeichnet, daß** zwischen einem Ausgang der Verstärkeranordnung (1, 2, 3) und einer zweiten Zuleitung (17) der Wandlereinrichtung (7) ein Integrator (4, 5, 6) angeordnet ist.

13. Vorrichtung nach Anspruch 11 oder 12,
**dadurch gekennzeichnet, daß** die Verstärkereinrichtung (1, 2, 3) einen Eingangsverstärker (3) mit nachgeschaltetem Grundwellenbandfilter (2) und ausgagnseitiger Rechteckformerstufe (1) aufweist.

14. Vorrichtung nach einem der Ansprüche 11 bi 13,
**dadurch gekennzeichnet, daß** die Meßeineinrichtung (8) einen zwischen Bezugspotential und die erste Leitung (18) der Wandlereinrichtung gechalteten Meßwiderstand (8) aufweist.

15. Vorrichtung nach einem der Ansprüche 11 bis 14,
**dadurch gekennzeichnet, daß** der Komparator (11) durch eine ohmsche Einrichtung (12) zwischen Ausgang und zweiten Eingang (+) rückgekoppelt ist.

16. Vorrichtung nach einem der Ansprüche 11 bis 15,
**dadurch gekennzeichnet, daß** zischen Bezugspotential und zweiten Eingang (+) des Komparator (11) eine weitere ohmsche Einrichtung (10) geschaltet ist.

17. Vorrichtung nach Anspruch 15 und 16,
**dadurch gekennzeichnet, daß** die ohmschen Einrichtungen (10, 12) Widerstände sind, und daß diese Widerstände so dimensioniert sind, daß der Komparator (11) eine symmetrisch zum Bezugspotential wirkende Schaltysterese aufweist.

18. Vorrichtung nach einem der Ansprüche 11 bis 17,
**dadurch gekennzeichnet, daß** der Umschalter (9) zwischen dem Eingang der Verstärkereinrichtung (1, 2, 3) und der ersten Zuleitung (18) der Wandlereinrichtung (7) angeordnet ist, wobei der Umschalter (9) an den Eingang der Vertärkereinrichtung (1, 2, 3) nach Maßgabe eines Umschaltsignales (D) entweder Bezugspotetnial schaltet oder ein an der ersten Zuleitung (18) der Wandlereinrichtung (7) abgreifbares Signal (C).

19. Vorrichtung nach einem der Ansprüche 11 bis 18,
**dadurch gekennzeichnet, daß** die Wandlereinrichtung (7) eine Piezowandlereinrichtung ist.

20. Vorrichtung nach Anspruch 19,
**dadurch gekennzeichnet, daß** die Piezowandlereinrichtung lediglich ein Piezoelement aufweist, das sowohl zur Schwingungserrecung als auch -detektion vorgesehen ist.

## Claims

1. A method for controlling a transducer device (7) comprising two supply lines (17, 18) in a level indicator, in which the transducer device (7) is coupled to a fork resonator with fork tines and is used for both oscillation excitation and for oscillation detection,
**characterised in that** during the oscillation excitation, the capacitance value or inductance value between the supply lines (17, 18) or a variable proportional thereto is determined, and if it deviates from a predetermined desired value by a predetermined amount, then an interference status signal is generated.

2. A method according to Claim 1,
**characterised in that** the interference status signal is generated if the predetermined desired value is fallen short of by a predetermined value.

3. A method according to Claim 1 or 2,
**characterised in that** the determination of the capacitance value or the inductance value is achieved by evaluating the current or the current intensity and thus the charge that flows in the transducer device (7) and supply lines (17, 18) during charge-reversal processes.

4. A method according to one of Claims 1 to 3,
**characterised in that** the measurement range for the capacitance measurement is in the nF range.

5. A method according to one of Claims 1 to 4,
**characterised in that** an interference-free operation is signalled if the detected capacitance value is greater than approximately 1nF and in particular greater than approximately 2.5nF.

6. A method according to one of Claims 1 to 5,
**characterised in that** if the detected capacitance value is less than InF and in particular less than approximately 0.5nF, disturbed operation is signalled by the interference status signal being emitted.

7. A method according to one of Claims 1 to 6,
**characterised in that** for determining the capacitance value, the charge-reversal currents flowing in the transducer device (7) are tapped at a measurement resistor (8) and evaluated in a comparator (11).

8. A method according to Claim 7,
**characterised in that** the comparator (11) is acted upon by a switching hysteresis.

9. A method according to Claim 8,
**characterised in that** the switching hysteresis is chosen to be symmetrical.

10. A method according to one of Claims 1 to 9,
**characterised in that** the switching hysteresis of the comparator (11) is chosen to be such a size that a capacitance (7) or inductance predetermined only by the lines (17, 18) does not result in a switchover of the comparator (11), whereas a switchover of the comparator (11) occurs in accordance with edge changes of an excitation signal (B) supplied to the transducer device (7) when the transducer device (7) is correctly connected to the lines (17, 18).

11. A device for carrying out the method according to one of Claims 1 to 10, consisting of a transducer device (7), a feedback branch with an amplifier configuration (1, 2, 3), a changeover switch (9) and an ohmic measurement device (8), wherein the transducer device (7) is connected to the feedback branch of the amplifier configuration (1, 2, 3), and wherein the ohmic measurement device (8) is connected to a first supply line (18) of the transducer device (7) that can be switched off with the input of the amplifier configuration (1, 2, 3) according to a control signal (D) by means of the changeover switch (9), to which ohmic measurement device (8) charge-reversal currents of the transducer device are transformed into a voltage,
**characterised in that** the measurement device (8) is connected to a first input (-) of a comparator (11), the second input (+) of which is at a predetermined potential, and **in that** to the output of the comparator (11) there is connected a frequency evaluation stage (20), which generates an interference status signal if a signal that can be tapped at the output of the comparator (11) falls beneath a predetermined frequency.

12. A device according to Claim 11,
**characterised in that** an integrator (4, 5, 6) is arranged between an output of the amplifier configuration (1, 2, 3) and a second supply line (17) of the transducer device (7).

13. A device according to Claim 11 or 12,
**characterised in that** the amplifier configuration (1, 2, 3) comprises an input amplifier (3) with a post-connected fundamental wave bandpass filter (2) and a squaring stage (1) on the output side.

14. A device according to one of Claims 11 to 13,
**characterised in that** the measurement device (8) comprises a measurement resistor (8) connected between the reference potential and the first line (18) of the transducer device.

15. A device according to one of Claims 11 to 14,
**characterised in that** the comparator (11) is fed back through an ohmic device (12) between the output and the second input (+).

16. A device according to one of Claims 11 to 15,
**characterised in that** a further ohmic device (10) is connected between the reference potential and the second input (+) of the comparator (11).

17. A device according to Claims 15 and 16,
**characterised in that** the ohmic devices (10, 12) are resistors,
and **in that** these resistors are dimensioned so that the comparator (11) exhibits a switching hysteresis acting symmetrically to the reference potential.

18. A device according to one of Claims 11 to 17,
**characterised in that** the change-over switch (9) is arranged between the input of the amplifier configuration (1, 2, 3) and the first supply line (18) of the transducer device (7), with the change-over switch (9) switching either reference potential or a signal (C) that can be tapped at the first supply line (18) of the transducer device (7) to the input of the amplifier configuration (1, 2, 3) in accordance with a change-over signal (D).

19. A device according to one of Claims 11 to 18,
**characterised in that** the transducer device (7) is a piezoelectric transducer device.

20. A device according to Claim 19,
**characterised in that** the piezoelectric transducer device comprises only one piezoelectric element that is provided for the oscillation excitation and also the oscillation detection.

## Revendications

1. Procédé de commande d'une installation de conversion (7) comportant deux lignes d'alimentation (17, 18) d'un appareil de mesure de niveau de remplissage, selon lequel, l'installation de conversion (7) est couplée à un résonateur à fourche muni de dents et servant à la fois à exciter et à détecter les oscillations,
**caractérisé en ce qu'**
on détermine la valeur de la capacité ou la valeur de l'inductance entre les lignes d'alimentation (17, 18) ou une grandeur proportionnelle à celle-ci pendant l'excitation en oscillation et, en cas d'écart par rapport à une grandeur de consigne prédéfinie, au-delà d'une valeur donnée, on génère un signal de perturbation.

2. Procédé selon la revendication 1,
**caractérisé en ce que**
le signal de perturbation est généré en cas de dépassement vers le bas de la grandeur de consigne prédéfinie, d'un écart correspondant à une valeur prédéfinie.

3. Procédé selon la revendication 1 ou 2,
**caractérisé en ce que**
la détermination de la valeur de la capacité ou de la valeur de l'inductance se fait par l'exploitation du courant ou de l'intensité du courant et ainsi de la charge qui passe pendant les opérations de conversion dans l'installation de conversion (7) et les lignes d'alimentation (17, 18).

4. Procédé selon les revendications 1 à 3,
**caractérisé en ce que**
la plage de mesure de la capacité se situe dans le domaine nF.

5. Procédé selon les revendications 1 à 4,
**caractérisé en ce que**
lors de la saisie d'une valeur de capacité supérieure à environ 1nF et notamment de l'ordre de 2,5nF, on signale un fonctionnement sans perturbation.

6. Procédé selon les revendications 1 à 5,
**caractérisé en ce que**
pour une valeur de capacité saisie inférieure à 1nF, et notamment de l'ordre de 0,5nF, un fonctionnement perturbé est signalé par l'émission d'un signal de perturbation.

7. Procédé selon les revendications 1 à 6,
**caractérisé en ce que**
pour déterminer la valeur de la capacité, on exploite les intensités de conversion traversant l'installation de conversion (7) en les mesurant sur une résistance de mesure (8) et en les exploitant dans un comparateur (11).

8. Procédé selon la revendication 7,
**caractérisé en ce qu'**
on applique une hystérésis de commutation au comparateur (11).

9. Procédé selon la revendication 8,
**caractérisé en ce qu'**
on choisit une hystérésis de commutation symétrique.

10. Procédé selon les revendications 1 à 9,
**caractérisé en ce qu'**
on choisit l'hystérésis de commutation du comparateur (11) de façon à ce qu'une capacité (7) ou une inductance, prédéfinie dans les lignes (17, 18) ne se traduise pas par une commutation du comparateur (11) alors que pour une installation de conversion (7) branchée correctement sur les lignes (17, 18), la commutation du comparateur (11) se fait selon l'indication de l'alternance des flancs d'un signal d'excitation (B) appliqué à l'installation de conversion (7).

11. Dispositif pour la mise en oeuvre du procédé selon les revendications 1 à 10, composé d'une installation de conversion (7), d'une branche de couplage en réaction avec un dispositif amplificateur (1, 2, 3), un commutateur (11) et une installation de mesure ohmique (8),
l'installation de conversion (7) étant branchée dans la branche de réaction du dispositif amplificateur (1, 2, 3),
l'installation de mesure ohmique (8) qui transforme les intensités de commutation de l'installation de conversion en une tension, est reliée à une première ligne d'alimentation (18) de l'installation de conversion (7) coupée par le commutateur (9) en fonction d'un signal de commande (B) appliqué à l'entrée du dispositif amplificateur (1, 2, 3),
**caractérisé en ce que**
l'installation de mesure (8) est reliée à une première entrée (-) d'un comparateur (11) dont la seconde entrée (+) est à un potentiel prédéfini, et
la sortie du comparateur (11) est reliée à un étage d'exploitation de fréquence (20) générant un signal de perturbation si le signal pris à la sortie du comparateur (11) passe en dessous d'une fréquence prédéfinie.

12. Dispositif selon la revendication 11,
**caractérisé par**
un intégrateur (4, 5, 6) installé entre une sortie du dispositif amplificateur (1, 2, 3) et une seconde ligne d'alimentation (17) de l'installation de conversion (7).

13. Dispositif selon la revendication 11 ou 12,
**caractérisé en ce que**
l'installation d'amplification (1, 2, 3) comporte un amplificateur d'entrée (3) suivi en amont d'un filtre fondamental (2) et du côté de la sortie, d'un étage de mise en forme de signal rectangulaire (1).

14. Dispositif selon les revendications 11 à 13,
**caractérisé en ce que**
l'installation de mesure (8) comporte une résistance de mesure (8) branchée entre le potentiel de référence et la première ligne (18) de l'installation de conversion.

15. Dispositif selon les revendications 11 à 14,
**caractérisé en ce que**
le comparateur (11) est couplé en réaction par une installation ohmique (12) entre la sortie et la seconde entrée (+).

16. Dispositif selon les revendications 11 à 15,
**caractérisé par**
une autre installation ohmique (10) branchée entre le potentiel de référence et la seconde entrée (+) du comparateur (11).

17. Dispositif selon les revendications 15 et 16,
**caractérisé en ce que**
les installations ohmiques (10, 12) sont des résistances, dimensionnées pour que le comparateur (11) présente une hystérésis de commutation agissant symétriquement par rapport au potentiel de référence.

18. Dispositif selon les revendications 11 à 17,
**caractérisé en ce que**
le commutateur (9) est prévu entre l'entrée de l'installation d'amplification (1, 2, 3) et la première ligne d'alimentation (18) de l'installation de conversion (7), et le commutateur 9, commute selon un signal de commutation (D), sur l'entrée de l'installation d'amplification (1, 2, 3), soit un potentiel de référence, soit un signal (C) pris au niveau de la première ligne d'alimentation (18) de l'installation de conversion (7).

19. Dispositif selon les revendications 11 à 18,
**caractérisé en ce que**
l'installation de conversion (7) est une installation de conversion piézo-électrique.

20. Dispositif selon la revendication 19,
**caractérisé en ce que**
l'installation de conversion piézo-électrique comporte uniquement un élément piézo-électrique à la fois pour exciter les oscillations et pour les détecter.
